# EUROPEAN PATENT SPECIFICATION

(11) **EP 3 038 504 B1**
(45) Date of publication and mention of the grant of the patent: **18.12.2019**
(21) Application number: 14786290.8
(22) Date of filing: 26.08.2014
(51) Int. Cl.: A47J 37/06

(54) **COOKING MACHINE**
KOCHMASCHINE
APPAREIL DE CUISSON

(30) Priority: 27.08.2013 IT MI20131416
(43) Date of publication of application: 06.07.2016
(73) Proprietor: De'Longhi Appliances S.r.l., 31100 Treviso (IT)
(72) Inventor: DE' LONGHI, Giuseppe, 31100 Treviso (TV) (IT)
(74) Representative: Di Gennaro, Sergio
(86) International application number: PCT/IB2014/064072
(87) International publication number: WO 2015/028940

(56) References cited:
- US-A- 5 165 328
- US-A- 5 590 583
- US-A1- 2004 035 845
- US-B1- 6 201 217
- US-B1- 6 747 250

## Description

The present invention refers to a cooking machine.

In particular, the present invention concerns a cooking machine of the type comprising an outer casing, within which a container for foodstuffs to be cooked and a source of hot air that is transportable in the direction of said foodstuffs are housed.

Such types of machines are usually portable, or rather they have small dimensions and are sometimes called fryers, ovens, or the like.

At the state of the art such types of cooking machines are known that when used as fryers require oil or fat or equivalent substances that help the cooking, in relatively small amounts. For this reason they are usually called "dry fryers".

In particular, patent EP1781154 describes a fryer of such a kind, in which the foodstuffs are contained in a container arranged inside the casing and in which a particular transportation of the hot air makes it possible for them to be cooked, with small amounts of oil. In particular, the hot air is blown inside the container by heating means that are suitable for generating a hot airflow.

The introduction of hot air inside the container of the foodstuffs occurs from above and from one side of the container itself, whereas it comes out from below. A baffle of the generated hot airflow, determines such a path of the hot air and the presence of an annular channel, which is obtained between the container and the casing, determines the ejection of air from below.

Such a machine, moreover, comprises means for mixing foodstuffs that are arranged inside the container and that are mobile with respect to it and a housing or tank for fat substances, which is separated from said container but is connected with it, so as to be able to transfer such a substance on the foodstuffs during cooking.

Small portable ovens are also known for cooking food similarly comprising a casing within which there is present a container/tray on which a source for generating heat, arranged above and below the tray, transmits its heat.

The Applicant has observed that the configuration of the fryer of patent EP1781154 causes the diffusion of the hot air substantially in a manner that is tangential with respect to the foodstuffs. Indeed, the heat is distributed from an emission mouth that is arranged in an area of the foodstuffs container that is not central.

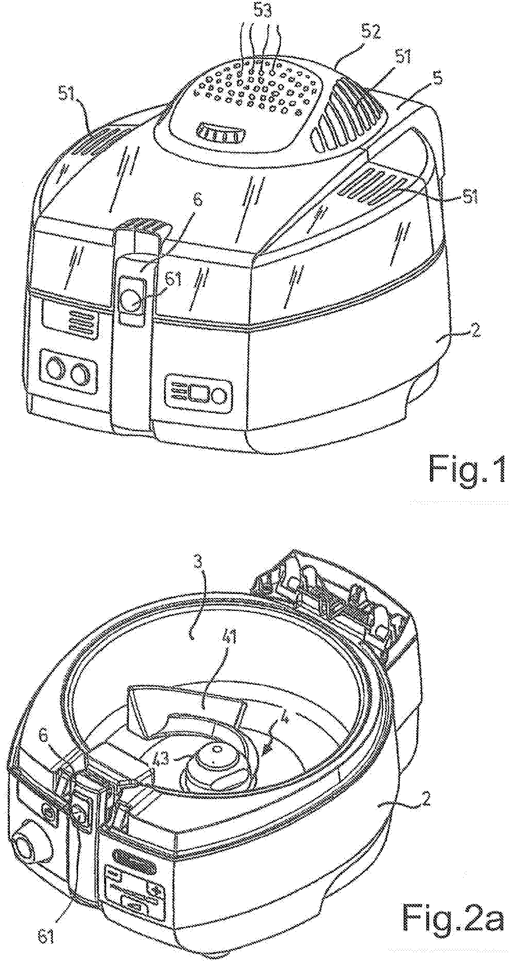

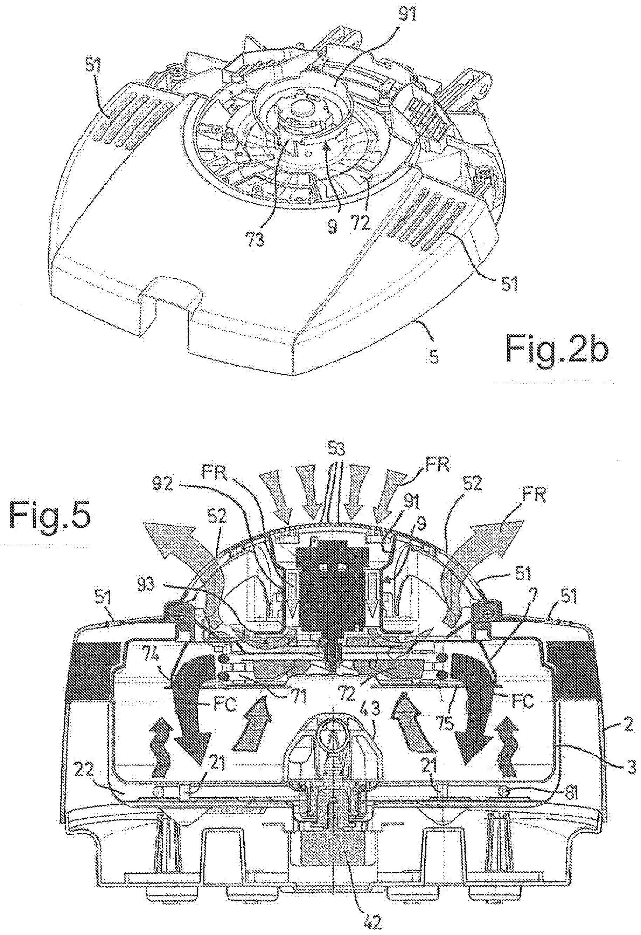

From here a diffusor defines a path for distributing towards the foodstuffs, which is almost always tangential with respect to them, as can be easily seen in figure 2 of such a patent.

Moreover, in order to make the air circulate more effectively, the returning air that must be again heated by the heating means, comes out from the container and crosses an annular channel obtained between the container and the casing. In order to make the discharge of air effective such an annular channel must be advantageously delimited. The area at the top of the machine has a mixing of air that can cause turbulences in which hot and cold air can mix in an undesired manner.

The present invention proposes to avoid the aforementioned drawbacks by making a cooking machine for foodstuffs, of the type that is conventionally indicated for cooking substantially in the absence of oil, in which the diffusion of hot air on the container of the foodstuffs and the diffusion of the cooling air of the motor are further optimised.

One aspect of the present invention concerns a machine for cooking foodstuffs having the characteristics of the attached claim 1.

The characteristics and the advantages of the machine according to the present invention shall become clearer and obvious from the following description, given as an example and not for limiting purposes, of an embodiment that is given with reference to the attached figures, in which:
- figure 1 shows a perspective view of the machine as a whole according to the present invention;
- figure 2a shows a perspective view of the machine as a whole without a lid according to the present invention;
- figure 2b shows a perspective view of the lid without the cap,

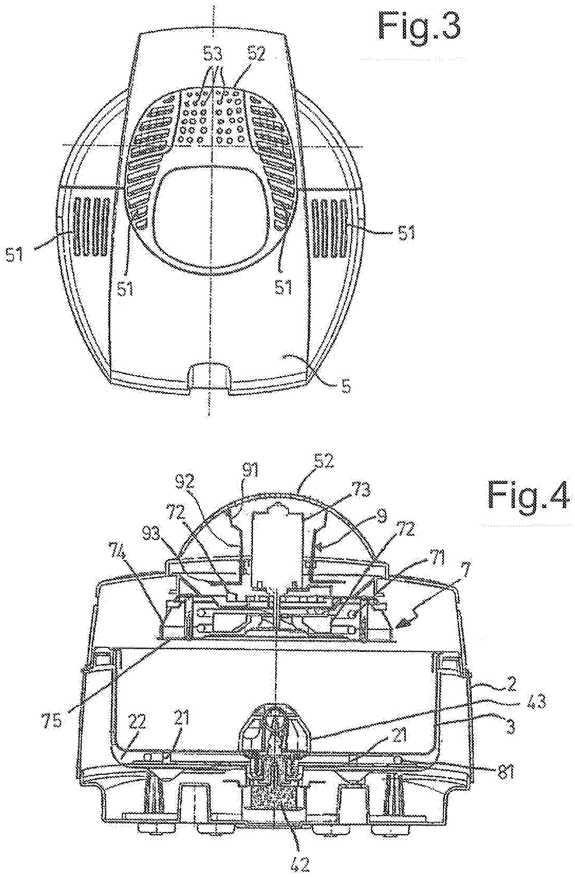

- figure 3 shows a view from above of the machine according to the present invention;
- figure 4 shows a section view of the machine according to the present invention;
- figure 5 shows a section view of the machine according to the present invention, in particular highlighting the flow lines of the hot air and of the cooling air.

With reference to the mentioned figures the cooking machine according to the present invention is a multipurpose machine that can be used as a fryer, or as an oven for cooking sweets, cakes, pizza and other similar food. Moreover, it can be used for cooking risotto, pies, sauces etc...

The machine substantially comprises an outer casing 2 that is suitable for housing a container 3 for foodstuffs to be cooked in the machine. The container is preferably cylindrical-shaped and is received in a housing of the casing substantially having the same shape. A plurality of projections 21, that rise from the bottom of the casing, allow the container to be rested in it.

The casing 2 is closed by a lid 5 which follows its shape on the perimeter and that is fixedly connected to it preferably through a spring-mechanism, which keeps the lid itself in a position that is normally open. Its closure is ensured with a snap-mechanism 6 that is arranged on the front of the casing on its upper edge. Releasing the button 61 causes the lid to open.

The machine further comprises means 4 for mixing the foodstuffs contained in the container substantially comprising a shaped blade 41 that is actuated by a motor 42 and is fitted the shaft of such a motor through a pin 43. Such a motor is arranged below the container 3 in a special housing and its shaft enters inside the container through a central hole 31 that is obtained on the bottom of the container itself.

The pin 43 can be released from the shaft and in such a way the blade and the container 3 can be extracted from the casing.

Associated with such a lid 5, means 7 are provided for generating a hot airflow in the direction of the foodstuffs arranged in the container 3 and means for distributing the cooling air.

Such generation means comprise at least one upper heating element 71, usually comprising one or more spiral- or ring-shaped electrical resistances and at least one fan 72, that is adapted to generate an airflow heated by said heating element. Such a fan is moved by means of at least one motor 73.

In the illustrated embodiment the motor 73 is positioned in a special housing of the lid with its drive shaft arranged on a vertical axis Y; the fan, which is fitted on such a shaft, thus rotates around such an axis. The heating element is arranged at the bottom of the motor and substantially surrounds such a fan.

According to one characteristic of the present invention, outside the heating element and the fan there is a duct for conveying air 74, which is adapted to direct the hot airflow (the flow identified by the arrows FC of figure 5) in a direction that is substantially perpendicular with respect to the plane on which the foodstuffs are arranged inside the container.

Such a conveying duct is preferably bell-shaped; advantageously, it is closed, at its lower part, by a protective grating 75. The generation means 7 are positioned in the lid, so as to correspond to a central area of the underlying container 3. In such a way, the directed flow reaches the foodstuffs in a substantially homogeneous manner.

According to a further characteristic of the present invention, the machine comprises at least one lower heating element 81 that is arranged below the container 3. Such a lower element is housed at the base of the casing in an interspace 22 that is obtained between the container itself and the casing due to the presence of the projections 21 that fix the container itself in a raised position with respect to the casing.

Such a second heating element, when cooking certain foods like for example risotto, cakes or the like that need to receive heat from below, cooperates with the upper heating element 71.

According to a further characteristic of the present invention the dimensions of the generation means overall have an important role; indeed, the diameter of the conveying duct 74 is only slightly shorter than the diameter of the container 3; in such a way the distribution of the airflow is homogeneous on the foodstuffs. Preferably, the diameter of the duct is less than 70% of the diameter of the container.

According to the claimed invention, the lid 5 is provided on its sides with air intakes 51 that place the container 3 in communication with outside. In such a way, air circulation has been created inside and outside the container in which the foodstuffs are cooked, thus improving the characteristics in terms of fragrance and cooking of the foods themselves.

Such air intakes are positioned laterally inside the lid with respect to a central dome 52 and are preferably also provided on the sides of the dome itself of the lid below which the motor 73 that actuates the fan 72 is positioned.

The dimension of the conveying duct, as indicated above, is such as to guarantee a free path for the airflow from and towards the air intakes 51, which for such a purpose are made in the lateral position of the lid indicated above with respect to the dome 52, right at such a lower free space.

The lid 5 advantageously has at least one transparent portion so as to allow the foodstuffs positioned inside the container to be seen.

The distribution means of the cooling air comprise a distribution duct 9 which substantially surrounds the motor 73 and which has an upper frustoconical portion 91 whose opening faces the central dome 52. Such a dome is suitably provided with a plurality of holes 53 that are suitable for allowing air to pass in the direction of such a distribution duct. The diameter of the opening of such a frustoconical portion advantageously corresponds to the area of the dome provided with such holes 53.

Beneath such a frustoconical portion the duct has a central portion 92 that is substantially cylindrical-shaped. The diameter of such a portion is selected so as to create a suitable space between it and the body of the motor 73 for the air flow to descend.

The lower portion 93 of the duct acts like a collar 93 so as to facilitate the upward radial ejection of the cooling air flow.

Figure 5 illustrates the arrows FR that indicate the circulation of the cooling air. Such air enters from above into the machine through the holes 53 of the dome 52, it is transported downwards by the duct 9, it is diffused around the motor 73 in the central portion 92, it is radially distributed from the flared portion 93 of the duct and is ejected through the air intakes 51.

The different positions between the air inlet holes and the air outlet holes (i.e. physically separated) create a separation of the two flows 51 and 53, hot and cold air, preventing short circuiting, which could lead the machine to overheat.

In such a way the work of the fan 72 is optimised, dividing the flows of hot air FC and cold air FR. In particular, by channelling the cold airflow stagnation of air is avoided inside the dome, and therefore the turbulences in such an area, thus obtaining, at the same time, also a cooling and a thermal abatement of the motor body.

The variable section of the duct, in particular the differences between the inlet diameter and the diameter of the central portion, generate a Venturi effect, through which air increases its speed and therefore the heat exchange that promotes the cooling of the motor.

## Claims

1. Cooking machine of the type comprising an outer casing (2), within which there is housed a container (3) for foodstuffs to be cooked and a source of hot air transportable in the direction of said foodstuffs, such casing being closed at its upper part by a lid (5), associated with such lid there are provided means (7) for the generation of a hot airflow in the direction of the foodstuffs arranged in the container (3) comprising at least an upper heating element (71), at least a fan (72) actuated by a motor (73) adapted to generate an airflow heated by said heating element, and a duct (74) for conveying air, adapted to direct the hot airflow downwards in a direction substantially perpendicular to the plane on which the foodstuffs are arranged in the container (3),
a duct (9) for distributing the cooling air which surrounds such motor (73) adapted to collect cold air from outside through holes (53) obtained on such lid (5) and to direct it downwards around such motor and to distribute it radially and to eject it towards an edge through air intakes (51) provided laterally on the lid (5),
**characterised in that**
such distribution duct has a variable diameter and in particular it has an upper frustoconical portion (91) whose opening faces a central dome (52) in the area having such holes (53),
beneath such frustoconical portion the duct has a substantially cylindrical-shaped central portion (92), the diameter of such portion being selected so as to create a suitable space between it and the body of the motor (73) for the descending air flow,
the duct further comprising a lower portion (93) which has a flaring directed upwards so as to facilitate the upward radial ejection of the cooling airflow.

2. Machine according to claim 1, wherein the generation means (7) and the distribution means are positioned in the lid, so as to correspond to a central area of the underlying container (3).

3. Machine according to claim 1, further comprising a lower heating element (81) positioned beneath the container (3).

4. Machine according to claim 3, wherein such lower element is housed in an interspace (22) obtained between the container itself and the casing (2).

5. Machine according to claim 4, wherein the container rests on projections (21) which are detached from the casing and which fix the container itself in a raised position with respect to the casing.

6. Machine according to claim 1, wherein the dimension of the conveying duct (74) is such to guarantee a free path for the airflow between the container (3) from and towards the air intakes (51).

7. Machine according to claim 1, wherein such at least one upper heating element (71), comprises one or more spiral- or ring-shaped electrical resistances surrounding the fan (72).

8. Machine according to claim 1, wherein such conveying duct is bell-shaped.

9. Machine according to claim 1, wherein such fan (72) rotates in a suitable actuated manner around a vertical axis (Y).

10. Machine according to claim 1, wherein the air inlet (53) and outlet (51) holes are physically separated one from each other.

## Patentansprüche

1. Kochmaschine des Typs umfassend ein Außengehäuse (2), innerhalb dessen ein Behälter (3) für zu garende Lebensmittel und eine Quelle für in Richtung dieser Lebensmittel zu fördernde Heißluft angeordnet sind, wobei dieses Gehäuse an seinem oberen Teil durch einen Deckel (5) verschlossen ist;
diesem Deckel Mittel (7) zugeordnet sind zur Erzeugung eines warmen Luftstroms in Richtung der im Behälter (3) angeordneten Lebensmittel, umfassend zumindest ein oberes Heizelement (71), zumindest einen durch einen Motor (73) betätigten Lüfter (72), der zum Erzeugen eines von diesem Heizelement beheizten Luftstroms ausgebildet ist, und eine Luftförderleitung (74), die dazu eingerichtet ist, den warmen Luftstrom abwärts in eine Richtung zu führen, die im Wesentlichen senkrecht zur Ebene verläuft, auf der die Lebensmittel im Behälter (3) angeordnet sind;
eine Leitung (9) zur Verteilung der diesen Motor (73) umgebenden Kühlluft, die dazu vorgesehen ist kalte Luft von außen durch auf dem Deckel (5) angeordnete Löcher (53) zu sammeln, diese nach unten zu richten und um den Motor herum radial zu verteilen und diese zu einem Rand hin durch Lufteinlässe (51) auszustoßen, die seitlich am Deckel (5) vorgesehen sind,
**dadurch gekennzeichnet, dass**
diese Verteilungsleitung einen variablen Durchmesser besitzt und
insbesondere einen oberen kegelstumpfförmigen Abschnitt (91) aufweist, dessen Öffnung einer zentralen Haube (52) im Bereich mit diesen Öffnungen (53) gegenübersteht,
unter diesem kegelstumpfförmigen Abschnitt die Leitung einen mittleren im Wesentlichen zylinderförmigen Abschnitt (92) aufweist, wobei der Durchmesser dieses Abschnitts so ausgewählt ist, dass zwischen diesem und dem Motorkörper (73) ein geeigneter Raum für den absteigenden Luftstrom gebildet wird,
wobei die Leitung ferner einen unteren Bereich (93) umfasst, der eine nach oben gerichtete Aufweitung aufweist, um das aufwärts gerichtete radiale Ausstoßen des kühlenden Luftstroms zu erleichtern.

2. Maschine nach Anspruch 1, wobei die Erzeugungsmittel (7) und die Verteilungsmittel im Deckel so positioniert sind, dass sie mit einem mittleren Bereich des darunterliegenden Behälters (3) übereinstimmen.

3. Maschine nach Anspruch 1, ferner umfassend ein unteres, unter dem Behälter (3) positioniertes Heizelement (81).

4. Maschine nach Anspruch 3, wobei dieses untere Element in einem Zwischenraum (22) untergebracht ist, der zwischen dem Behälter selbst und dem Gehäuse (2) realisiert ist.

5. Maschine nach Anspruch 4, wobei der Behälter auf Vorsprüngen (21) aufliegt, die vom Gehäuse unabhängig sind und die den Behälter selbst in einer angehobenen Position gegenüber dem Gehäuse befestigen.

6. Maschine nach Anspruch 1, wobei die Abmessungen der Förderleitung (74) so gewählt werden, dass sie einen freien Weg für den Luftstrom innerhalb des Behälters (3), weg von und hin zu den Lufteinlässen (51) gewährleisten.

7. Maschine nach Anspruch 1, wobei dieses zumindest eine obere Heizelement (71) einen oder mehrere spiral- oder ringförmige elektrische Widerstände umfasst, die den Lüfter (72) umgeben.

8. Maschine nach Anspruch 1, wobei diese Förderleitung glockenförmig ist.

9. Maschine nach Anspruch 1, wobei sich dieser Lüfter (72) in geeigneter Weise um eine Vertikalachse (Y) dreht.

10. Maschine nach Anspruch 1, wobei die Lufteinlass-(53) und -auslassöffnungen (51) physisch voneinander getrennt sind.

## Revendications

1. Appareil de cuisson du type comprenant un caisson externe (2), à l'intérieur duquel est logé un récipient (3) pour denrées alimentaires à cuire et une source d'air chaud transportable dans la direction desdites denrées alimentaires, ledit caisson étant fermé sur sa partie supérieure par un couvercle (5),
associés audit couvercle sont prévus des moyens (7) pour la génération d'un flux d'air chaud dans la direction des denrées alimentaires agencées dans le récipient (3), comprenant au moins un élément chauffant supérieur (71), au moins une soufflante (72) actionnée par un moteur (73) conçue pour générer un flux d'air chauffé par ledit élément chauffant, et un conduit (74) pour acheminer de l'air, conçu pour orienter le flux d'air chaud vers le bas dans une direction sensiblement perpendiculaire au plan dans lequel les denrées alimentaires sont agencées dans le récipient (3),
un conduit (9) pour répartir l'air de refroidissement qui encercle ledit moteur (73), conçu pour collecter de l'air froid à partir de trous traversants vers l'extérieur (53) obtenus sur ledit couvercle (5) et pour l'orienter vers le bas autour dudit moteur et pour le répartir radialement et pour l'éjecter en direction d'un bord à travers des entrées d'air (51) prévues latéralement sur le couvercle (5),
**caractérisé en ce que**
ledit conduit de distribution possède un diamètre variable et en
particulier il possède une partie tronconique supérieure (91) dont l'ouverture fait face à un dôme central (52) dans la zone possédant lesdits trous (53),
au-dessous de ladite partie tronconique, le conduit possède une partie centrale (92) de forme sensiblement cylindrique, le diamètre de ladite partie étant sélectionné de manière à créer un espace approprié entre celle-ci et le corps du moteur (73) pour l'écoulement d'air descendant,
le conduit comprenant en outre une partie inférieure (93) qui possède un évasement orienté vers le haut de manière à faciliter l'éjection radiale vers le haut du flux d'air de refroidissement.

2. Appareil selon la revendication 1, dans lequel les moyens de génération (7) et les moyens de distribution sont positionnés dans le couvercle, de manière à correspondre à une zone centrale du récipient sous-jacent (3) .

3. Appareil selon la revendication 1, comprenant en outre un élément chauffant inférieur (81) positionné au-dessous du récipient (3).

4. Appareil selon la revendication 3, dans lequel ledit élément inférieur est logé dans un espace intermédiaire (22) obtenu entre le récipient lui-même et le caisson (2).

5. Appareil selon la revendication 4, dans lequel le récipient repose sur des saillies (21) qui sont détachées du caisson et qui fixent le récipient lui-même dans une position surélevée par rapport au caisson.

6. Appareil selon la revendication 1, dans lequel la dimension du conduit de d'acheminement (74) est telle qu'elle garantit un libre parcours pour le flux d'air entre le récipient (3) à partir et en direction des entrées d'air (51) .

7. Appareil selon la revendication 1, dans lequel ledit au moins un élément chauffant supérieur (71) comprend une ou plusieurs résistances électriques en forme de spirale ou d'anneau encerclant la soufflante (72).

8. Appareil selon la revendication 1, dans lequel ledit conduit d'acheminement est en forme de cloche.

9. Appareil selon la revendication 1, dans lequel ladite soufflante (72) tourne d'une manière actionnée appropriée autour d'un axe vertical (Y).

10. Appareil selon la revendication 1, dans lequel les trous d'entrée (53) et de sortie (51) d'air sont physiquement séparés les uns des autres.
